(19) Europäisches Patentamt / European Patent Office / Office européen des brevets

(11) **EP 1 255 659 B1**

(12) **EUROPÄISCHE PATENTSCHRIFT**

(45) Veröffentlichungstag und Bekanntmachung des Hinweises auf die Patenterteilung:
**22.06.2011  Patentblatt 2011/25**

(51) Int Cl.:
***B60L 5/28*** (2006.01)

(21) Anmeldenummer: 01923580.3

(22) Anmeldetag: **15.02.2001**

(86) Internationale Anmeldenummer:
**PCT/EP2001/001714**

(87) Internationale Veröffentlichungsnummer:
**WO 2001/060653 (23.08.2001 Gazette 2001/34)**

(54) **VERFAHREN ZUR REGELUNG DER KONTAKTKRAFT ZWISCHEN STROMABNEHMER UND FAHRDRAHT**

METHOD FOR REGULATING THE CONTACT FORCE BETWEEN A PANTOGRAPH AND AN OVERHEAD CABLE

PROCEDE POUR REGULER LA FORCE DE CONTACT ENTRE UN PANTOGRAPHE ET UN CATENAIRE

(84) Benannte Vertragsstaaten:
**AT BE CH CY DE DK ES FI FR GB GR IE IT LI LU MC NL PT SE TR**

(30) Priorität: **17.02.2000  DE 10007287**

(43) Veröffentlichungstag der Anmeldung:
**13.11.2002  Patentblatt 2002/46**

(73) Patentinhaber: **Stemmann-Technik GmbH 48465 Schüttorf (DE)**

(72) Erfinder:
• **RODE, Manfred**
  **69168 Wiesloch (DE)**
• **JÄGER, Karl**
  **88090 Immenstaad (DE)**

(74) Vertreter: **Ksoll, Peter et al Patentanwälte Bockermann, Ksoll, Griepenstroh Bergstrasse 159 44791 Bochum (DE)**

(56) Entgegenhaltungen:
**EP-A- 0 282 802     DE-A- 4 334 716**

EP 1 255 659 B1

**Beschreibung**

Die Erfindung bezieht sich auf ein Verfahren zur Regelung der Kontaktkraft zwischen Stromabnehmer und Fahrdraht gemäß dem Anspruch 1.

Es sind allgemein Einrichtungen/Verfahren zur Messung der Anpreßkraft bzw. Kontaktkraft mittels eines Kontaktkraft-Meßsensors (Kontaktkraftmessung) und Einrichtungen/Verfahren zur Regelung der Kontaktkraft zwischen Stromabnehmer und Fahrdraht/Oberleitung einer Schienenanlage (Kontaktkraftregelung) bekannt. Dabei wird bei der Messung und Regelung der Kontaktkraft nicht auf das Problem eines Ausfalls eines Kontaktkraft-Meßsensors eingegangen, obwohl die Ausfallsicherheit bei der Regelung der Kontaktkraft zwischen Stromabnehmer/Oberleitung eine große Rolle spielt, denn ein Ausfall eines Kontaktkraft-Meßsensors hat infolge der aus den Kontaktkraft-Meßsignalen abgeleiteten Kontaktkraft beträchtliche Auswirkungen/Rückwirkungen auf die eingestellte Anpreßkraft und auf die Regelung der Kontaktkraft zwischen Stromabnehmer und Fahrdraht. Ein Ausfall eines Kontaktkraft-Meßsensors kann dazu führen, daß sich die Vorteile der Kontaktkraft-Regelung umkehren, d. h. eine Kontaktkraft-Regelung bei ausgefallenem Kontaktkraft-Meßsensor führt im Vergleich zum ungeregelten Fall zu einer Verschlechterung des Kontaktkraftverhaltens.

Das Dokument DE4334716 A1 offenbart, ein Verfahren zur Regelung der Kontaktkraft zwischen Stromabnehmer und Fahrdraht unter Einsatz von mindestens zwei die Kontaktkraft ermittelnden Kontaktkraft-Messsensoren.

Der Erfindung liegt die Aufgabe zugrunde, ein verbessertes Verfahren zur Regelung der Kontaktkraft zwischen Stromabnehmer und Fahrdraht anzugeben.

Diese Aufgabe wird in Verbindung mit den Merkmalen des Oberbegriffes erfindungsgemäß durch die im Anspruch 1 gekennzeichneten Merkmale gelöst.

Die mit der Erfindung erzielbaren Vorteile bestehen insbesondere darin, daß das vorgeschlagene Verfahren zur Regelung der Kontaktkraft zwischen Stromabnehmer und Fahrdraht insgesamt die Sicherheit und Qualität einer Kontaktkraftmessung und Kontaktkraftregelung beträchtlich erhöht. Es werden die Gegebenheiten der Meßsig-nalbildung zur Bestimmung eines Maßes für die aktuelle Kontaktkraft ausgenutzt, um derart eine Aussage über die Funktionsweise/Störung eines Kontaktkraft-Meßsensors treffen zu können und es wird quasi ein Beobachter geschaffen, der das Meßsystem auf den Ausfall eines Kontaktkraft-Meßsensors überprüft. Durch die Erkennung eines Ausfalls eines Kontaktkraft-Meßsensors kann gezielt in die Messung eingegriffen werden, um auf diese Weise negative Rückwirkungen auf die Kontaktkraftregelung zu vermeiden. Ein Einsatz redundanter Kontaktkraft-Meßsensoren ist vorteilhaft nicht erforderlich. Der notwendige rechentechnische Aufwand ist nicht zu hoch und in einfacher Weise realisierbar.

Vorteilhafte Ausgestaltungen der Erfindung sind in den Unteransprüchen gekennzeichnet.

Weitere Vorteile des vorgeschlagenen Verfahrens zur Regelung der Kontaktkraft zwischen Stromabnehmer und Fahrdraht ergeben sich aus der nachstehenden Beschreibung.

Die Erfindung wird nachstehend anhand der in der Zeichnung dargestellten Ausführungsbeispiele näher erläutert. Es zeigen:

Fig. 1 die zeitlichen Signalverläufe der beiden Kontaktkraft-Meßsignale sowie des gemittelten Kontaktkraft-Meßsignals für ideale Verhältnisse,

Fig. 2 die zeitlichen Signalverläufe der beiden Kontaktkraft-Meßsignale sowie der Kontaktkraft-Meßsignal-Mittelwerte für reale Verhältnisse,

Fig. 3 die mittlere quadratische Abweichungen für reale, gemessene Kontakt- kraft-Meßsignale,

Fig. 4 eine Gegenüberstellung der mittleren quadratischen Abweichung und der mittleren Betragsabweichung ,

Fig. 5 den Sachverhalt gemäß Fig. 4 mit einem ausgefallenen, konstant den Wert 0 liefernden Kontaktkraft-Meßsensor,

Fig. 6 den Sachverhalt gemäß Fig. 4 mit einem ausgefallenen, konstant den Maximalwert liefernden Kontaktkraft-Meßsensor,

Fig. 7 den Sachverhalt gemäß Fig. 4 mit einem ausgefallenen, konstant ein mit- telwertfreies/-behaftetes weißes Rauschen liefernden Kontakt-kraft- Meßsensor.

Es ist allgemein bekannt, die zwischen rechter Seite der Stromabnehmerwippe des Stromabnehmers und Fahrdraht sowie die zwischen linker Seite des Stromabnehmers und Fahrdraht bewirkten Kontaktkräfte mittels getrennter Kontaktkraft-Meßsensoren zu erfassen. Aufgrund dieser konstruktiven Anordnung der Kontaktkraft-Meßsensoren an der Stromabnehmerwippe und des Zickzackverlaufs der Oberleitung läßt sich über die Mittelung der Auslenkungen der Schleifleistenfedern ein Maß für die Kontaktkraft angeben. Das Kontaktkraft-Meßsignal $y_1$ des ersten (beispielsweise rechten) Kontaktkraft-Meßsensors beträgt:

$$y_1 = X \pm x_1$$

Das Kontaktkraft-Meßsignal $y_2$ des zweiten

(beispielsweise linken) Kontaktkraft-Meßsensors beträgt:

$$y2 = X \pm x2$$

Das aus y1, y2 gemittelte Kontaktkraft-Meßsignal ys beträgt dann:

$$ys = (y1 + y2)/2$$

Die beiden Kontaktkraft-Meßsignale y1, y2, allgemein auch yi (mit i = 1, 2) ergeben sich als additive Überlagerung des stationären Anteils X infolge der Schleifleisten-Vorspannung und der dynamischen Anteile x1, x2 infolge des Leitungszickzacks des Fahrdrahtes.

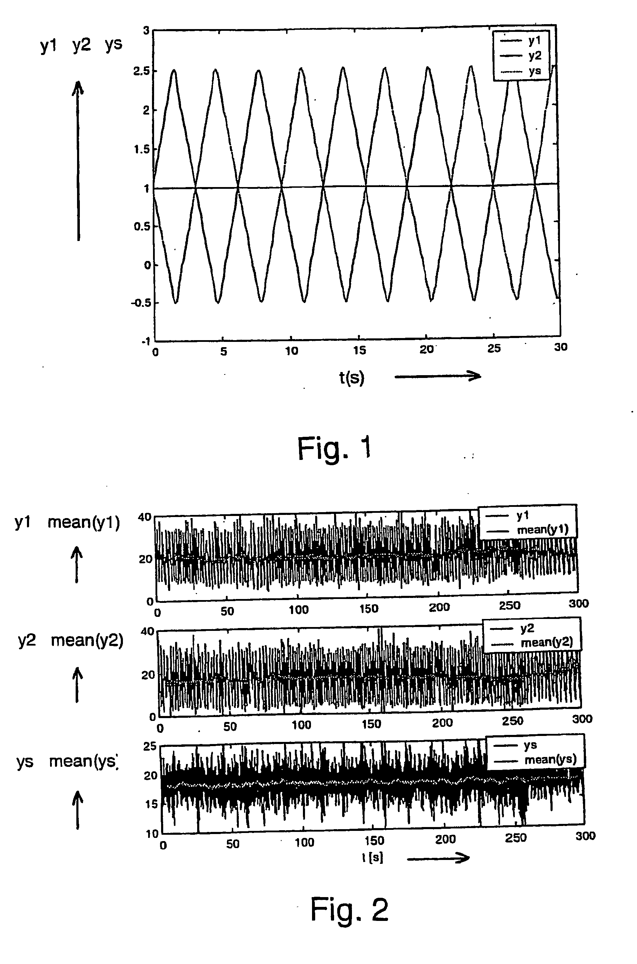

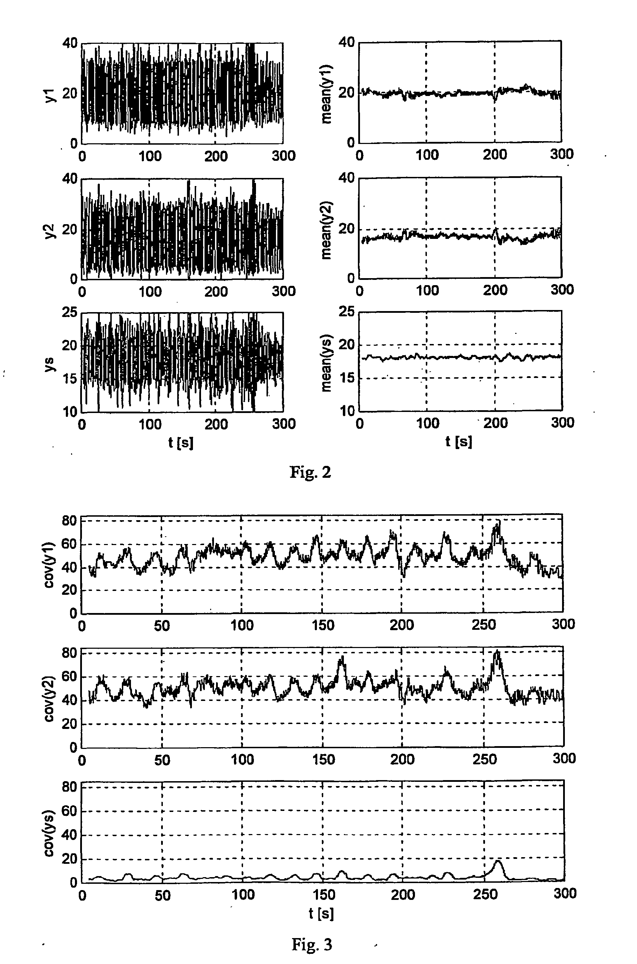

In den Fig. 1 und Fig. 2 sind die zeitlichen Signalverläufe (t = Zeit) des Kontaktkraft-Meßsignals y1, des Kontaktkraft-Meßsignals y2 sowie des aus y1, y2 gemittelten Kontaktkraft-Meßsignals ys für ideale Verhältnisse - siehe Fig. 1 - und für reale Verhältnisse - siehe Fig. 2 - wiedergegeben. In Fig. 2 sind zusätzlich die Meßsignal-Mittelwerte mean(y1), mean(y2), mean(ys) eingetragen.

Die mittlere quadratische Abweichung des Meßsignals - in Anlehnung an die statistische Kenngröße Varianz - errechnet sich zu:

$$s^2_{ys,k} = E\{(ys_k - X)^2\}$$

mit E{...} = Mittelwert von {...}

$$\text{z.B. } E\{...\} = 1/n \sum_{i=k-n+1}^{k} ys_i$$

als gleitender Mittelwert über die letzten n-Meßwerte.
k = laufender Index für aktuellen Meßwert zum Zeitpunkt t=k*T, k=1,2,... mit T = Abtastschrittweite.

Einsetzen des Bildungsgesetzes für ys zum Meßzeitpunkt k liefert:

$$s^2_{ys,k} = E\{(y1_k + y2_k)/2 - X)^2\}$$
$$= E\{(0)^2\}$$

$s^2_{ys,k}$ = 0 für den Fall, daß die Einzelsignale $x1_k$, $x2_k$ am stationären Anteil X gespiegelt sind, $x1_k$= -$x2_k$.

Unabhängig davon, ob die Federauslenkung oder ein anderes Signal, beispielsweise durch direkte Kontaktkraftmessung gewonnen, zur Bildung des Kontaktkraft-Meßsignals herangezogen wird, gilt dieser Zusammenhang immer dann, wenn die verwendeten Einzelsignale am stationären Anteil X gespiegelt sind. Unsymmetrien in y1 und y2 infolge von Fehleinstellungen am Meßaufnehmer lassen sich kompensieren, indem der die Unsymmetrie verursachende Offset bei der Bildung von ys berücksichtigt wird.

In Fig. 3 sind die Gegebenheiten für reale, gemessene Kontaktkraft-Meßsignale wiedergegeben. Dabei sind die mittleren quadratischen Abweichungen cov(y1), cov(y2) der Einzelsignale und die mittleren quadratischen Abweichung cov(ys) des gemittelten Signals dargestellt. Der dynamische Anteil xi ist dabei mit der Varianz $s^2_{ys}$ gleichzusetzen. Der Fehler $s^2_{ys} > 0$ läßt sich auf nicht erfaßbare konstruktive und daraus resultierende stochastische Störungen zurückführen. Diese lassen sich in der Signalbeschreibung durch einen additiven, stochastischen (zufallsabhängigen) Term $e_i$ berücksichtigen:

$$yi = X + xi + e_i, \text{ mit } i = 1, 2$$

Bei Ausfall eines Kontaktkraft-Meßsensors ist die Bedingung $s^2_{ys} = 0$ verletzt - ohne stochastischen Term. Dies gilt sowohl für den Fall, daß der gestörte Kontaktkraft-Meßsensor einen konstanten Wert (Maximalwert oder 0) als auch ein stochastisches Rauschen liefert. Damit kann die mittlere quadratische Abweichung vom stationären Wert als Maß für die Detektion eines Ausfalls eines Kontaktkraft-Meßsensors herangezogen werden.

Der gerätetechnische Aufwand zur Detektion des Ausfalls eines Kontaktkraft-Meßsensors kann weiter reduziert werden, indem statt der mittleren quadratischen Abweichung der mittlere Betrag der Abweichung herangezogen wird.

Eine weitere Vereinfachung ergibt sich, wenn der Mittelwert - stationärer Signalanteil - nicht aus den Kontaktkraft-Meßsignalen selbst gebildet, sondern hierfür die Sollwertvorgabe des zur Regelung der Kontaktkraft eingesetzten Regelalgorithmus herangezogen wird. Dieser sorgt per se dafür, daß der stationäre Signalanteil im Mittel mit der Sollwertvorgabe übereinstimmt.

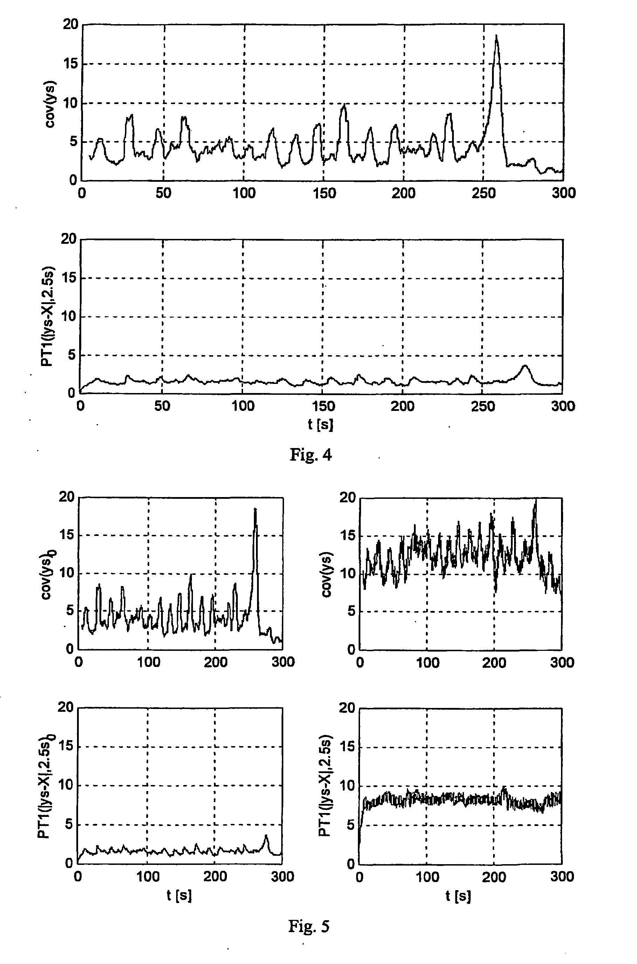

Fig. 4 zeigt in einer Gegenüberstellung die mittlere quadratische Abweichung cov(ys) und die mittlere Betragsabweichung bzw. den mittleren Betrag der Abweichung PT1 (|ys-X|2.5s), d. h. das mittels PT1-Filter ($k_p$=1, $T_1$=2.5s) gefilterte Abstandsquadrat zwischen dem gemittelten Kontaktkraft-Meßsignal ys und dem Reglersollwert X.

In den Fig. 5, 6 und 7 sind verschiedene Störfälle (ein ausgefallener Kontaktkraft-Meßsensor) wiedergegeben. Dabei ist zu erkennen, daß im Störungsfall der Anstieg der mittleren quadratischen Abweichung cov(ys) wie auch die mittlere Betragsabweichung (mittlerer Betrag der Abweichung) PT1(|ys-X|2.5s), d. h. das PT1-gefilterte Abstandsquadrat signifikant verändert gegenüber dem Nominalfall (Index 0) mit der mittleren quadratischen Abweichung cov(ys)$_0$ wie auch der mittlere Betragsabweichung (mittlerer Betrag der Abweichung) PT1 (|ys-X|2.5s)$_0$ ist.

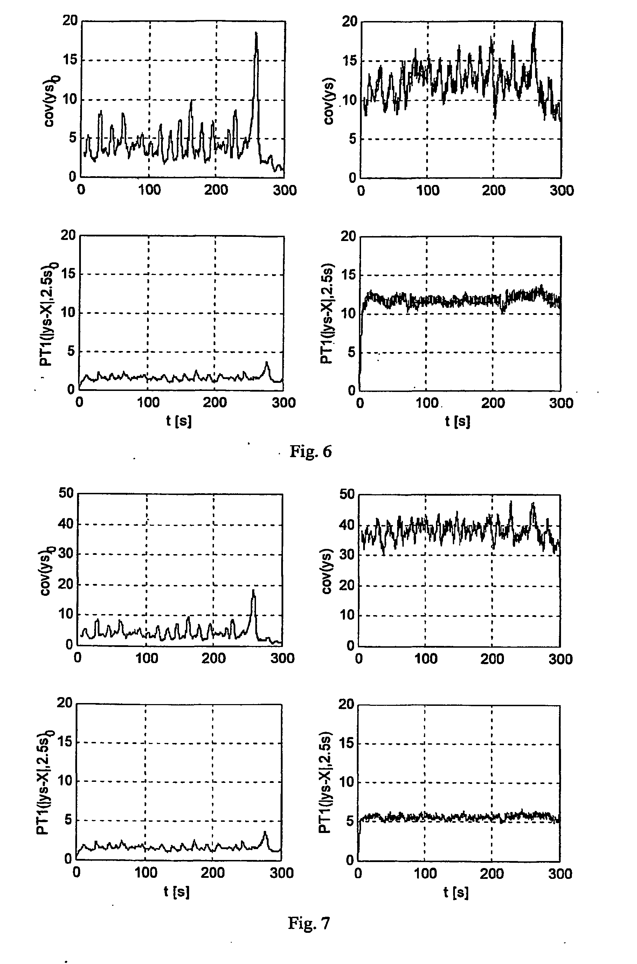

Fig. 5 und 6 geben den Sachverhalt mit einem ausgefallenem Kontaktkraft-Meßsensor wieder, wobei der ausgefallene Kontaktkraft-Meßsensor gemäß Fig. 5 konstant den Wert 0 liefert und der ausgefallene Kontaktkraft-Meßsensor gemäß Fig. 6 konstant einen Maximalwert liefert. Es ist zu erkennen, daß die sich einstellende Varianz $s_{ys,\vartheta}^2$ bzw. cov(ys) jeweils deutlich über der zum Vergleich ebenfalls eingezeichneten "ungestörten" Varianz (Nominal-Fall) $s_{ys\phi}^2$ bzw. cov(ys)$_0$ liegt.

Fig. 7 gibt den Sachverhalt mit einem ausgefallenem Sensor wieder, wobei der ausgefallene Sensor kein konstantes Signal, sondern ein mittelwertfreies/-behaftetes weißes Rauschen liefert. Auch in diesem Fall ist deutlich zu erkennen, daß anhand der gleitenden Varianz des gemittelten Kontaktkraft-Meßsignals eine Aussage über den Ausfall eines Kontaktkraft-Meßsensors möglich ist.

Damit ist es einfach möglich, ein effektives Maß zur Detektion des Ausfalls eines Kontaktkraft-Meßsensors durch die Filterung der mittleren betragsmäßigen Abweichung vom Schleifleistensollwert der Kontaktkraft zu generieren.

Die Geschwindigkeit des Zugverbandes macht sich in einer Dehnung oder Stauchung der Kontaktkraft-Meßsignale bemerkbar und hat keinen negativen Einfluß auf die vorstehend erläuterten Betrachtungen.

Eine Aussage darüber, welcher der beiden Kontaktkraft-Meßsensoren ausgefallen ist, läßt sich in Anlehnung an die statistischen Kenngrößen durch die Auswertung höherer Momente, beispielsweise Schiefe (Maß für Symmetrie), treffen.

Eine weitere Möglichkeit der Detektion eines Ausfalls eines Kontaktkraft-Meßsensors ist die Spektralanalyse der Kontaktkraft-Meßsignale, um anhand der detektierten Oberleitungs-Zickzack-Frequenz die Funktionsweise der Kontaktkraft-Meßsensoren zu überprüfen.

**Patentansprüche**

1. Verfahren zur Regelung der Kontaktkraft zwischen Stromabnehmer und Fahrdraht unter Einsatz von mindestens zwei die Kontaktkraft ermittelnden Kontaktkraft-Meßsensoren, **dadurch gekennzeichnet, daß** aus den Kontaktkraft-Meßsignalen (y1, y2) der Ausfall eines Kontaktkraft-Meßsensors detektiert wird.

2. Verfahren nach Anspruch 1, **dadurch gekennzeichnet, daß** die aus den Meßsignalen (y1, y2) gebildete aktuelle mittlere quadratische Abweichung ($s_{ys,\vartheta}^2$ bzw. cov(ys)) mit der mittleren quadratischen Abweichung im ungestörten Nominal-Fall ($s_{ys\phi}^2$ bzw. cov(ys)$_0$) verglichen und zur Detektion der Ausfalls eines Kontaktkraft-Meßsensors herangezogen wird.

3. Verfahren nach Anspruch 1, **dadurch gekennzeichnet, daß** der aus den Meßsignalen (y1, y2) gebildete aktuelle mittlere Betrag der Abweichung (PT1 (|ys-X|2.5s)) mit dem mittleren Betrag der Abweichung im ungestörten Nominal-Fall (PT1 (|ys-X|2.5s)$_0$) verglichen und zur Detektion der Ausfalls eines Kontaktkraft-Meßsensors herangezogen wird.

4. Verfahren nach Anspruch 2 oder 3, **dadurch gekennzeichnet, daß** die Sollwertvorgabe des zur Regelung der Kontaktkraft eingesetzten Regelalgorithmus als Mittelwert bzw. stationärer Signalanteil herangezogen wird.

5. Verfahren nach Anspruch 1, **dadurch gekennzeichnet, daß** die Detektion des Ausfalls eines Kontaktkraft-Meßsensors mittels einer Spektralanalyse der Kontaktkraft-Meßsignale (y1, y2) erfolgt, mit welcher anhand der detektierten Oberleitungs-Zickzack-Frequenz die Funktionsweise der Kontaktkraft-Meßsensoren überprüft wird.

6. Verfahren nach einem der vorstehenden Ansprüche, **dadurch gekennzeichnet, daß** eine Aussage darüber, welcher der Kontaktkraft-Meßsensoren ausgefallen ist, durch Auswertung höherer Momente, insbesondere der Schiefe, getroffen wird.

**Claims**

1. Method for regulating the contact force between a pantograph and an overhead cable by means of at least two contact force measuring sensors for determining the contact force, **characterised in that** the failure of a contact force measuring sensor is detected from the contact force measured signals (y1, y2).

2. Method according to Claim 1, **characterised in that** the current average quadratic deviation ($S^2_{ys9}$ or cov (ys)) derived from the measured signals (y1, y2) is compared with the average quadratic deviation in the undisturbed nominal case ($S^2_{y}\phi$ or cov(ys)$_0$) and used to detect the failure of a contact force measuring sensor.

3. Method according to Claim 1, **characterised in that** the current average amount of the deviation (PT1 (|ys-X|2.5s)) derived from the measured signals (y1, y2) is compared with the average amount of the deviation in the undisturbed nominal case (PT1 (|ys-X|2.5s)$_0$) and used to detect the failure of a contact force measuring sensor.

4. Method according to Claim 2 or 3, **characterised in that** the setpoint selection of the control algorithm used to regulate the contact force is used as an average value or static signal component.

5. Method according to Claim 1, **characterised in that** the detection of the failure of a contact force measuring sensor is effected by way of a spectral analysis of the contact force measured signals (y1, y2), with which (spectral analysis) the operation of the contact force measuring sensors is verified by reference to the detected overhead cable zigzag frequency.

6. Method according to any one of the preceding claims, **characterised in that** an indication of which of the contact force measuring sensors has failed is obtained by the evaluation of higher moments, in particular skewness.

**Revendications**

1. Procédé pour réguler la force de contact entre un collecteur de courant et un fil de traction en utilisant au moins deux capteurs de mesure de force de contact qui déterminent la force de contact, **caractérisé en ce que** l'on détecte la défaillance d'un capteur de mesure de force de contact à partir des signaux de mesure de force de contact (y1, y2).

2. Procédé selon la revendication 1, **caractérisé en ce que** l'écart quadratique moyen actuel ($s^2_{ys\theta}$ resp. cov(ys)) défini à partir des signaux de mesure (y1, y2) est comparé avec l'écart quadratique moyen dans le cas nominal non perturbé ($s^2_{ys\phi}$ resp. cov (ys)$_0$) et est exploité pour la détection de la défaillance d'un capteur de mesure de force de contact.

3. Procédé selon la revendication 1, **caractérisé en ce que** la valeur moyenne actuelle de l'écart (PT1 (|ys-X| 2,5s)) définie à partir des signaux de mesure (y1, y2) est comparée avec la valeur moyenne de l'écart dans le cas nominal non perturbé (PT1(|ys-X|2,5s)$_0$) et est exploitée pour la détection de la défaillance d'un capteur de mesure de force de contact.

4. Procédé selon la revendication 2 ou 3, **caractérisé en ce que** la valeur de consigne par défaut de l'algorithme de régulation utilisé pour la régulation de la force de contact est exploitée à titre de valeur moyenne ou de portion de signal stationnaire.

5. Procédé selon la revendication 1, **caractérisé en ce que** la détection de la défaillance d'un capteur de mesure de force de contact est effectuée au moyen d'une analyse spectrale des signaux de mesure de force de contact (y1, y2), avec laquelle on contrôle le fonctionnement des capteurs de mesure de force de contact à partir de la fréquence de zigzag du caténaire détectée.

6. Procédé selon l'une des revendications précédentes, **caractérisé en ce que** l'on effectue une affirmation concernant celui des capteurs de mesure de force de contact qui est défaillant par analyse de moments d'ordre supérieur, en particulier de la dissymétrie.

Fig. 1

Fig. 2

Fig. 2

Fig. 3

Fig. 4

Fig. 5

8

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4334716 A1